# EUROPEAN PATENT APPLICATION

(11) **EP 3 860 228 A1**
(43) Date of publication of application: **04.08.2021**
(21) Application number: 18935484.8
(22) Date of filing: 27.09.2018
(51) Int. Cl.: H04W 52/02, H04W 72/04

(54) **USER EQUIPMENT, RADIO BASE STATION, AND RADIO COMMUNICATION METHOD**

(71) Applicant: NTT DoCoMo, Inc., Tokyo 100-6150 (JP)
(72) Inventor: TAKEDA, Daiki, Tokyo 100-6150 (JP); TAKEDA, Kazuaki, Tokyo 100-6150 (JP)
(74) Representative: Hoffmann Eitle
(86) International application number: PCT/JP2018/036124
(87) International publication number: WO 2020/065885

(57) **Abstract**

There are provided a user terminal, a radio base station, and a radio communication method that are capable of configuring a wake-up signal (WUS) that possibly ensures compatibility. The user terminal includes a reception section that receives a second wake-up signal which is multiplexed onto a first wake-up signal, using a prescribed multiplexing scheme, and is transmitted. Furthermore, the user terminal includes a control section that detects an identifier that is associated with the second wake-up signal, and controls reception of a control signal that is associated with the detected identifier.

## Description

### Technical Field

The present disclosure relates to a user terminal, a radio base station, and a radio communication method.

### Background Art

In the Universal Mobile Telecommunication System (UMTS) network, Long Term Evolution (LTE) is specified for the purpose of higher speed data rate and low latency, and the like. Furthermore, a system that is a successor to LTE has also been under study for the purpose of broader bandwidth and higher speed than in LTE. Examples of the system that is a successor to LTE include LTE-Advanced (LTE-A), Future Radio Access (FRA), 5th generation mobile communication system (5G), 5G plus (5G+), Radio Access Technology (New-RAT), New Radio (NR), and the like.

For example, in the Third Generation Partnership Project (3GPP), a technical study for suppressing power consumption by a user terminal (User Equipment (UE)) has been conducted.

For example, a wake-up signal (WUS) is introduced in Release 15 (Rel.15) (for example, NPL 1).

### Citation List

### Non-Patent Literature

NPL 1
   3GPP TS 36.304, "User Equipment (UE) procedures in idle mode (Release 15)", June 2018

### Summary of Invention

### Technical Problem

However, in a case where the WUS is introduced, there is a need to study on compatibility to overcome a version difference from a subsequent release or the like.

An object of the present disclosure is to provide a user terminal, a radio base station, and a radio communication method that are capable of configuring a WUS that possibly ensures compatibility.

### Solution to Problem

A user terminal according to one aspect of the present disclosure includes: a reception section that receives a second wake-up signal which is multiplexed onto a first wake-up signal, using a prescribed multiplexing scheme, and is transmitted; and a control section that detects an identifier that is associated with the second wake-up signal, and controls reception of a control signal that is associated with the detected identifier.

A radio base station according to one aspect of the present disclosure includes: a transmission section that transmits a second wake-up signal that is multiplexed on a first wake-up signal, using a prescribed multiplexing scheme, and a control signal; and a control section that associates an identifier with the second wake-up signal.

A radio communication method according to one aspect of the present disclosure includes: receiving a second wake-up signal that is multiplexed on a first wake-up signal, using a prescribed multiplexing scheme, and is transmitted; and detecting an identifier associated with the second wake-up signal, and controlling reception of a control signal associated with the detected identifier.

### Advantageous Effects of Invention

According to the present disclosure, a WUS can be configured that ensures compatibility.

### Brief Description of Drawings

FIG 1 is a diagram illustrating a first example of a WUS in Rel.15;
FIG 2 is a diagram illustrating a second example of the WUS in Rel.15;
FIG 3 is a diagram illustrating an example of the WUS that is configured for every UE group;
FIG 4 is a block diagram illustrating an example of a configuration of a radio base station according to an embodiment;
FIG 5 is a block diagram illustrating an example of a configuration of a user terminal to an embodiment;
FIG 6 is a diagram illustrating a first example of a WUS according to an embodiment;
FIG 7 is a diagram illustrating a second example of the WUS according to an embodiment;
FIG 8 is a diagram illustrating a third example of the WUS according to an embodiment;
FIG 9 is a diagram illustrating a fourth example of the WUS according to an embodiment;
FIG 10 is a diagram illustrating a fifth example of the WUS according to an embodiment;
FIG 11 is a diagram illustrating a sixth example of the WUS according to an embodiment;
FIG 12 is a diagram illustrating a seventh example of the WUS according to an embodiment;
FIG 13 is a diagram illustrating an eighth example of the WUS according to an embodiment;
FIG 14 is a diagram illustrating a ninth example of the WUS according to an embodiment;
FIG 15 is a diagram illustrating a first example of an operational relationship between a legacy-WUS (L-WUS), an additional-WUS (A-WUS), and UE according to an embodiment;
FIG. 16 is a diagram illustrating a second example of the operational relationship between the L-WUS, the A-WUS, and the UE according to an embodiment;
FIG. 17 is a diagram illustrating a first example of association between a UE group and a WUS ID according to an embodiment;
FIG. 18 is a diagram illustrating a second example of the association between the UE group and the WUS ID according to an embodiment;
FIG. 19 is a diagram illustrating a third example of the association between the UE group and the WUS ID according to an embodiment; and
FIG. 20 is a diagram illustrating an example of a hardware configuration of a radio base station and a user terminal according to the present disclosure.

### Description of Embodiments

An embodiment in the present disclosure below will be described below with reference to the drawings.

### (Embodiment)

The present embodiment relates to a wake-up signal (hereinafter referred to "WUS") that is a technique for suppressing power consumption by UE. First, a background of the WUS is described.

For establishing 5G standards, in Release 15 (Rel.15), the WUS for suppressing the power consumption by the UE intended for the IoT is introduced.

It is noted that the UE intended for IoT may be referred to as UE intended for narrow band IoT (NB-IoT) or enhanced machine type communication (eMTC). Furthermore, the UE in the present disclosure is not limited to the UE intended for IoT. For example, the UE in the present disclosure may be UE intended for NR

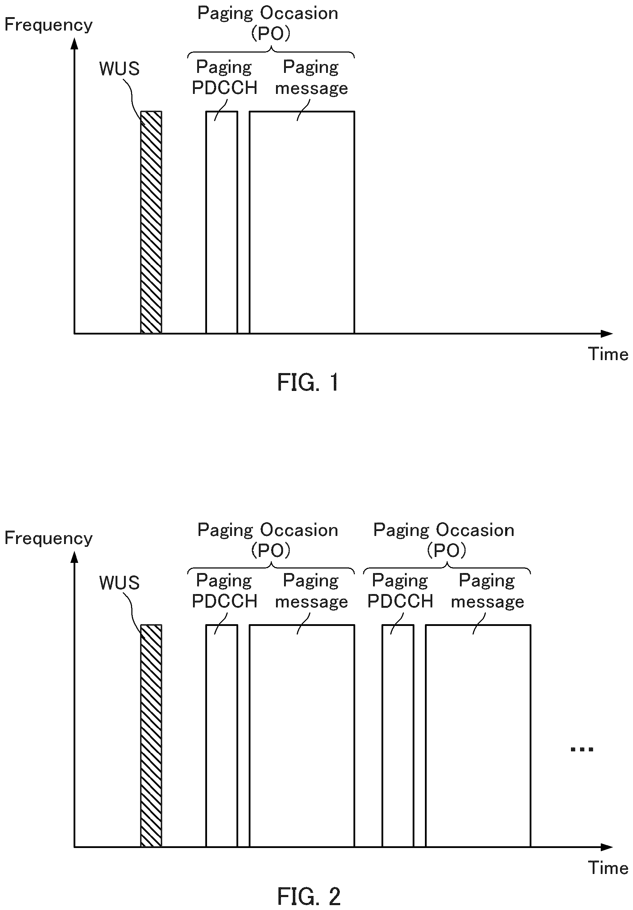

FIG. 1 is a diagram illustrating a first example of the WUS in Rel.15. FIG 2 is a diagram illustrating a second example of the WUS in Rel.15.

The horizontal axis in FIGS. 1 and 2 represents time and the vertical axis represents a frequency. In FIGS. 1 and 2, the WUS, and a Paging Physical Downlink Control Channel (PDCCH) and a paging message that are configured at a later time than the WUS are illustrated. It is noted that, in some cases, each of the paging PDCCH and the paging message is referred to as a control signal, a paging signal, or a paging occasion. In some cases, the paging occasion is hereinafter expressed as "PO" for short.

In FIG 1, an example of a case where a non-repetitive PO is configured and where a one-time PO is present is illustrated. In FIG 2, an example of a case where a repetitive PO and where the PO is repeated is illustrated.

It is noted that in FIGS. 1 and 2, sizes of the paging PDCCH and the paging message are examples and that the present disclosure is not limited to these. Furthermore, in figures subsequent to FIGS. 1 and 2, the sizes of the paging PDCCH and the paging message are also an example as in FIGS. 1 and 2, and the present disclosure is not limited to these.

The WUS and the PO that are illustrated in FIGS. 1 and 2, for example, are signals that are transmitted in a case where a radio base station provides a "wake-up" instruction to a user terminal in an idle mode. It is noted that the user terminal in the idle mode proceeds from the idle mode, for example, to connected mode, based on detection processing of the WUS and monitoring processing of the PO in accordance with a result of the WUS detection.

It is noted that the idle mode refers to a mode in which the user terminal is in a state of being able to receive a signal (a downlink signal) intermittently from the radio base station. The connected mode refers to a mode in which the user terminal is in the state of being able to receive the downlink signal and is in a state of being able to transmit a signal (an uplink signal) to the radio base station.

The terms the "idle mode" and the "connected mode" in the present embodiment are examples of the term that refers to a mode for the user terminal, and the present disclosure is not limited to these. Furthermore, the WUS and the PO are described as examples of the "wake-up" instruction. However, the term the "wake-up" is an example and the present disclosure is not limited to this.

In a case where the WUS is detected, the user terminal monitors the PO that is associated with the user terminal. Furthermore, in a case where the WUS is not detected, the user terminal may not monitor the PO. The PO monitoring, for example, is equivalent to the detection processing of the paging PDCCH, and reception processing of the paging message, which is based on a result of the detection of the paging PDCCH. By monitoring the PO, the user terminal proceeds from the idle mode, for example, to the connected mode.

With the WUS in Rel.15, which is illustrated in FIGS. 1 and 2, among user terminals that are present within an area covered by the radio base station, for example, all user terminals that are associated with the PO detect the WUS, and thus proceeding to the connected mode takes place. In this case, because the user terminal that may not proceed to the connected mode proceeds to the connected mode, there is a likelihood that the power consumption by the user terminal will increase.

In the discussion on the establishment of 5G standards at the Release 16 (Rel.16) stage, it has been considered that in order to suppress the power consumption by the user terminal, one or more groups (aggregation) is configured for a user terminal and that the WUS associated with every group is configured. For example, in a case where the WUS is configured for every group, the radio base station may provide the "wake-up" instruction to every group.

It is noted that, in some cases, a group that is configured for the user terminal is expressed as "UE group". Furthermore, when multiple UE groups are described distinguishably, in some cases, an index is assigned to a UE group, and groups are expressed as UE group #1, UE group #2, UE group #3, and so forth. It may be understood that the index which is assigned to a UE group is equivalent to an identifier for identifying the UE group. In some cases, the identifier for identifying the UE group is expressed as "UE group ID". It may be said that the UE group ID is associated with each UE group.

It is noted that a method of determining a UE group and a method of associating each user terminal and a UE group are not limited. Furthermore, the number of user terminals that are included in a UE group may be equal to or greater than 1. Furthermore, a method of notifying a user terminal of information indicating a UE group to which a user terminal belongs is also not limited.

Furthermore, the terms the "UE group" and the "UE group ID" are examples, and the present disclosure are not limited to these. The group that is configured for the user terminal, for example, may be referred to as "user group", "UE set", or "user set, and may be referred to as any other term.

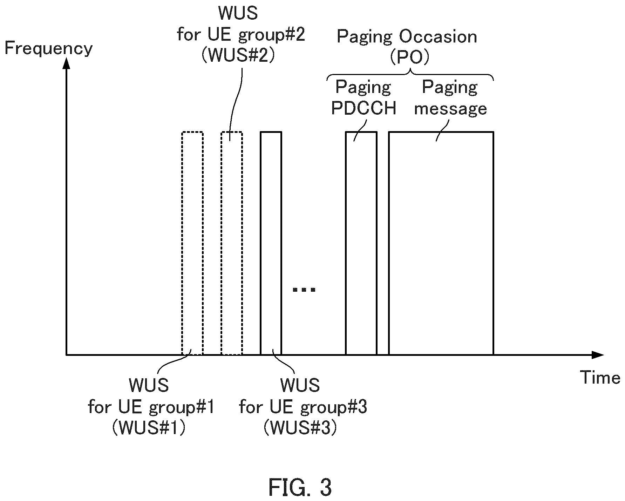

FIG 3 is a diagram illustrating an example of the WUS that is configured for every UE group.

The horizontal axis in FIG. 3 represents time, and the vertical axis represents a frequency. In FIG 3, a timing of the WUS that is configured for each of the three UE groups and the PO that is configured at a later timing than the WUS are illustrated. Furthermore, in FIG 3, transmission timings of the WUS (WUS #1) that is associated with UE group #1, the WUS (WUS #2) that is associated with UE group #2, and the WUS (WUS #3) that is associated with UE group #3 are illustrated. Then, in FIG 3, as indicated by a solid line, WUS #3 is configured.

For example, in a case where the WUS is detected, a user terminal determines whether or not the detected WUS is the WUS that is associated with a UE group to which the user terminal belongs. Then, in a case where the detected WUS is associated with the UE group to which the user terminal belongs, the user terminal monitors the PO.

For example, in the case of FIG 3, each user terminal detects WUS #3 and determines that WUS #3 is associated with UE group #3. In this case, the user terminal that belongs to UE group #3 monitors the PO. The user terminal that does not belong to UE group #3 may not monitor the PO. It is noted that identification information indicating the UE group to which the user terminal belongs, for example, is notified in advance by the radio base station to the user terminal.

The WUS is configured for every UE group, and thus, for example, the proceeding to the connected mode of the user terminal belonging to the UE group, which may not proceed from the idle mode to the connected mode, may be avoided. Because of this, the power consumption by the user terminal can be suppressed.

At this point, in a case where the WUS that is configured for every UE group is introduced, there is a likelihood that the user terminal that already complies with the WUS in Rel.15 will not detect the WUS that is configured for every UE group. For this reason, in a case where the WUS that is configured for every UE group is introduced, it is required that backward compatibility with the WUS in Rel. 15 is ensured.

Accordingly, in the present disclosure, the configuring of the WUS that possibly ensures the backward compatibility with the WUS in Rel.15 in a case where the WUS is configured for every UE group is described.

It is noted that in the following, in some cases, the WUS in Rel.15 is expressed as a legacy-WUS or "L-WUS". Furthermore, in some cases, the user terminal that complies with Rel.15 and receives the legacy-WUS is expressed as the legacy-UE.

Furthermore, in the following, in some cases, the WUS that is configured for every UE group is expressed as an additional-WUS or "A-WUS". It is noted that the additional-WUS may be referred to as a Rel.16-WUS. Furthermore, an identifier for identifying an A-WUS from any other A-WUSs may be associated with the A-WUS. For example, in some cases, the identifier of the A-WUS identifier is expressed as "WUS ID". For example, A-WUS #i (i is an integer that is equal to or greater than 1) indicates the A-WUS of which a WUS ID is "i".

It is noted that the UE group ID and the WUS ID are associated with each other on a one-to-one basis. In a case where the UE group ID and the WUS ID are associated with each other on a one-to-one basis, in some cases, the A-WUS that is to be associated with UE group #i is expressed as A-WUS #i. Furthermore, the term "WUS ID" is an example, and the present disclosure is not limited to this.

Furthermore, in some cases, the user terminal that complies with Rel.16 and receives an additional-WUS is expressed as the Rel.16-LTE. It is noted that, in addition to the A-WUS, the Rel. 16-LTE may also be able to detect the legacy-WUS.

Next, a radio communication system according to the present embodiment will be described.

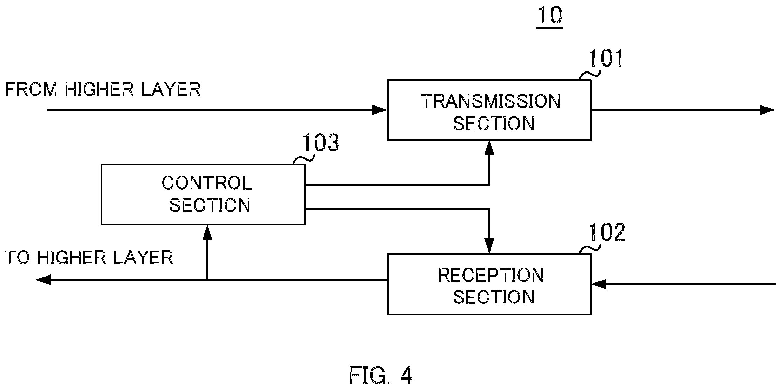

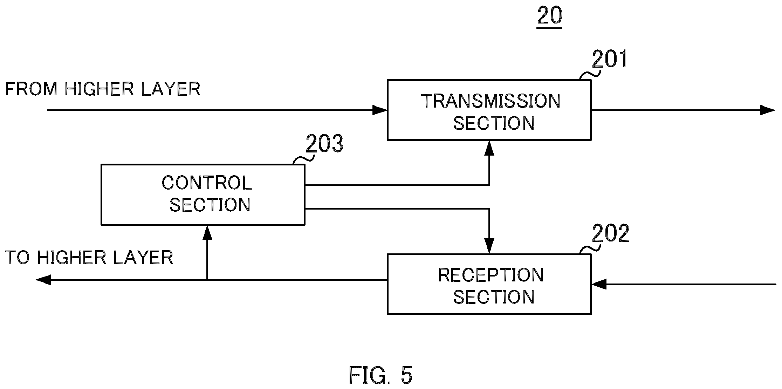

The radio communication system according to the present embodiment includes radio base station 10 (for example, also referred to as an eNodeB (eNB) or gNodeB (gNB)) that is illustrated in FIG 4, and user terminal 20 (for example, also referred to as the UE) that is illustrated in FIG 5. User terminal 20 has a radio connection (radio access) to radio base station 10. It is noted that, in the following, in some cases, radio base station 10 is expressed as base station 10 for short.

It is noted that configurations of radio base station 10 and user terminal 20 that will be described below represents an example of a function according to the present embodiment. Radio base station 10 and user terminal 20 may have a function that is not illustrated. Furthermore, in the case of a function of performing an operation according to the present embodiment, a function category and/or a name of a functional section are not limited.

FIG 4 is a block diagram illustrating an example of the configuration of radio base station 10 according to the present embodiment. Radio base station 10 includes transmission section 101, reception section 102, and control section 103.

Transmission section 101 generates various physical layer signals from a higher layer signal, and performs processing that transmits the generated signal (the downlink signal) to user terminal 20. For example, under the control of control section 103, transmission section 101 transmits the downlink signal. For example, the WUS, a signal that is mapped to the paging PDCCH, and a paging message may be included in the downlink signal.

Reception section 102 receives a signal (an uplink signal) from user terminal 20 and performs processing that acquires the higher layer signal from the received physical layer uplink signal.

Control section 103 performs control of transmission processing in transmission section 101 and control of reception processing in reception section 102. For example, control section 103 controls the transmission processing of the WUS, a paging PDCCH signal, and a paging message in the transmission section 101. For example, control section 103 controls transmission section 101 in such a manner that the transmission of the WUS, the paging PDCCH signal, and the paging message.

FIG. 5 is a block diagram illustrating the configuration of user terminal 20 according to the present embodiment. User terminal 20 includes transmission section 201, reception section 202, and control section 203.

Transmission section 201 generates various physical layer signals from a higher layer signal and performs processing that transmits the generated uplink signal to radio base station 10.

Reception section 202 receives a downlink signal from radio base station 10 and performs processing that acquires a higher layer signal from the received physical layer downlink signal. For example, under the control of control section 203, reception section 202 receives the downlink signal.

Control section 203 performs control of the transmission processing in transmission section 201 and control of the reception processing in reception section 202. For example, control section 203 performs the detection processing of the WUS and controls the monitoring processing of the PO in reception section 202 based on a result of the detection processing of the WUS. Furthermore, based on a result of the monitoring processing of the PO, control section 203 performs control that causes transmission and reception states in user terminal 20 to proceed from the idle mode, for example, to the connected mode.

It is noted that the detection processing of the WUS in user terminal 20 will be described below.

Next, a method of configuring the WUS that ensures the backward compatibility with the WUS (L-WUS) in Rel. 15.

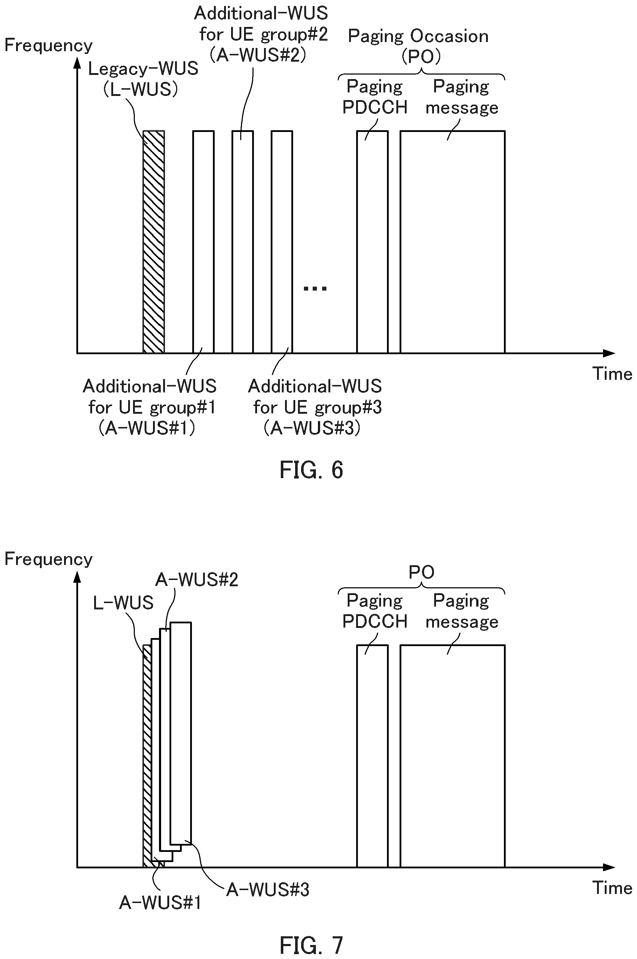

FIG 6 is a diagram illustrating the first example of the WUS according to the present embodiment.

The horizontal axis in FIG 6 represents time and the vertical axis represents a frequency. In FIG. 6, the L-WUS, A-WUSs #1 to #3 that are configured at a later timing than the L-WUS, and the PO that is configured at a later timing than A-WUSs #1 to #3 are illustrated. It is noted that the L-WUS and A-WUSs #1 to #3 are associated with the PO. Furthermore, in FIG 6, an example is illustrated in which the UE group ID and the WUS ID are associated with each other on a one-to-one basis. For example, A-WUS #1 is associated with UE group #1, A-WUS #2 is associated with UE group #2, and A-WUS #3 is associated with UE group #3.

In FIG 6, an example is illustrated in which Timing Division Multiplexing (TDM) is performed on the L-WUS and the A-WUS.

A timing of the L-WUS (a position on the time axis) is configured with an existing signaling. The existing signaling, for example, may be the signaling that is determined in Rel. 15.

Then, a timing of the A-WUS may be indicated by an time offset between the L-WUS and the A-WUS. The time offset may be provided independently of each of A-WUS #1, A-WUS #2, and A-WUS #3. The time offset between the L-WUS and the A-WUS may be notified to user terminal (for example, the Rel.16-UE) 20.

Alternatively, the timing of the A-WUS may be indicated by a pattern (a timing) of the position on the time axis. For example, the pattern of the position on the time axis may be configured in a manner that is selected from among multiple candidates for the pattern. The pattern of the position on the time axis for the A-WUS may be configured using the timing of the L-WUS as a reference (a base) and may be notified to user terminal (for example, the Rel.16-UE) 20.

FIG 7 is a diagram illustrating the second example of the WUS according to the present embodiment.

The horizontal axis in FIG 7 represents time, and the vertical axis represents a frequency. In FIG 7, the L-WUS, A-WUSs #1 to #3 that are configured at the same time (for example, in the same symbol) as the L-WUS, and the PO that is configured at a later timing than the L-WUS are illustrated. It is noted that the L-WUS and the A-WUS are associated with the PO. Furthermore, in FIG 7, an example is illustrated in which the UE group ID and the WUS ID are associated with each other on a one-to-one basis. For example, WUS #1 is associated with UE group #1, WUS #2 is associated with UE group #2, and WUS #3 associated with UE group #3.

In FIG 7, an example is illustrated in which Code Division Multiplexing (CDM) is performed on the L-WUS and the A-WUS at the same timing (for example, in the same symbol).

The timing of the L-WUS (the position on the time axis) is configured with the existing signaling. In this case, in the same manner as user terminal (the legacy-UE) 20 that receives the L-WUS, user terminal (the Rel.16-UE) 20 that receives the A-WUS receives the A-WUS at the timing of the L-WUS, which is configured with the existing signaling.

It is noted that a pattern of the A-WUS (for example, a pattern of an orthogonal sequence in compliance with CDM) may be configured using an L-WUS sequence as a reference and may be notified to user terminal (for example, the Rel.16-UE) 20.

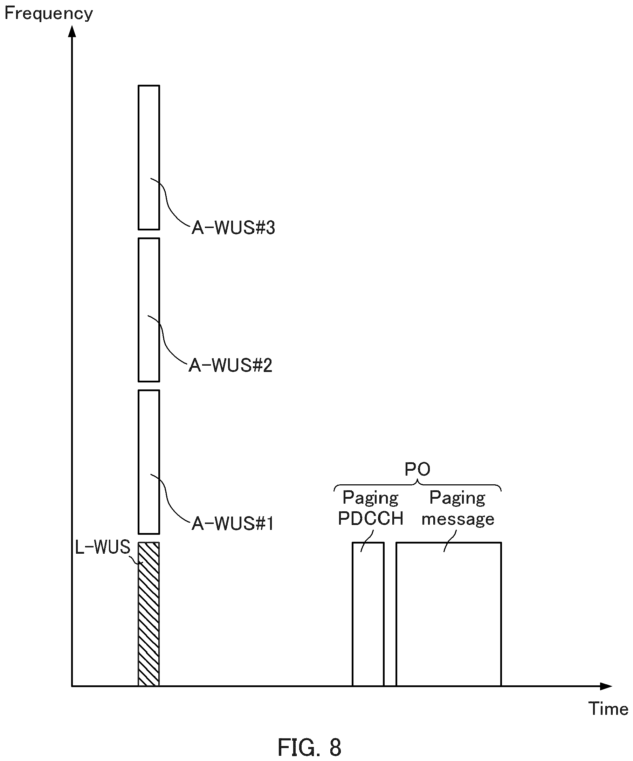

FIG 8 is a diagram illustrating a third example of the WUS according to the present embodiment.

The horizontal axis in FIG 8 represents time and the vertical axis represents a frequency. In FIG 8, the L-WUS, A-WUSs #1 to #3 that are configured at the same time (for example, in the same symbol) as the L-WUS, and the PO that is configured at a later timing than the L-WUS. It is noted that the L-WUS and the A-WUS are associated with the PO. Furthermore, in FIG 8, an example is illustrated in which the UE group ID and the WUS ID are associated with each other on a one-to-one basis. For example, WUS #1 is associated with UE group #1, WUS #2 is associated with UE group #2, and WUS #3 associated with UE group #3.

In FIG 8, an example is illustrated in which Frequency Division Multiplexing (FDM) is performed on the L-WUS and the A-WUS.

The timing of the L-WUS (the position on the time axis) is configured with the existing signaling. Furthermore, a frequency (a position on the frequency axis) of the L-WUS is configured with the existing signaling. The existing signaling, for example, may be the signaling that is determined in Rel.15. In this case, in the same manner as user terminal (the legacy-UE) 20 that receives the L-WUS, user terminal (the Rel.16-UE) 20 that receives the A-WUS receives the A-WUS at the timing of the L-WUS, which is configured with the existing signaling.

Then, the frequency (the position on the frequency axis) of the A-WUS may be indicated by a frequency offset between the L-WUS and the A-WUS. The frequency offset may be provided independently of each of the A-WUS #1, A-WUS #2, and A-WUS #3. The frequency offset between the L-WUS and the A-WUS may be notified to user terminal (for example, the Rel.16-UE) 20.

Alternatively, a frequency of the A-WUS may be indicated by a pattern of the position on the frequency axis. For example, the pattern of the position on the frequency axis may be configured in a manner that is selected from among multiple candidates for the pattern. The pattern of the position on the frequency axis for the A-WUS may be configured using the frequency of the L-WUS as a reference and may be notified to user terminal (for example, the Rel.16-UE) 20.

As illustrated in FIGS. 6 and 8, a position of the A-WUS at least one of the time axis and the frequency axis may be using a position of the L-WUS as a reference. Then, information indicating the position of the A-WUS that is configured using the position of the L-WUS as a reference may be notified to user terminal (for example, the Rel.16-UE) 20. With the use of this notification, user terminal (for example, the Rel.16-UE) 20 can configure the position of the A-WUS using, as a reference, the position of the L-WUS that is notified with the existing signaling. It is noted that the position of the A-WUS is not limited to this.

It is noted that in FIG 8, an example in which A-WUSs #1 to #3 are configured to be at a higher frequency than the L-WUS is illustrated, but that the A-WUS may be configured to be at a lower frequency than the L-WUS. Furthermore, of multiple A-WUSs, at least one may be configured to be at a lower frequency than the L-WUS, and at least another one may be configured to be a higher frequency than the L-WUS.

It is noted that, in the example described above, the L-WUS and the A-WUS are multiplexed with TDM, CDM, or FDM, but that the present disclosure is not limited to this. The L-WUS and the A-WUS may be multiplexed with a combination of multiple multiplexing schemes.

For example, CDM may be used between each of the multiple A-WUSs, and TDM may be used between the A-WUS that is multiplexed using CDM, and the L-WUS. Alternatively, FDM may be used between each of the multiple A-WUSs, and TDM may be used between the A-WUS that is multiplexed using FDM, and the L-WUS. Alternatively, CDM may be used between each of the multiple A-WUSs, and FDM may be used between the A-WUS that is multiplexed using CDM, and the L-WUS.

In other words, in a case where the L-WUS and the multiple A-WUSs are multiplexed, a multiplexing scheme that is used between each of the multiple A-WUSs and a multiplexing scheme that is used between the L-WUS and each of the multiple A-WUSs may be the same and may be different from each other.

Alternatively, no limitation to an example in which one multiplexing scheme is used between each of the multiple A-WUSs is imposed. Multiple multiplexing schemes may be used between each of the multiple A-WUSs.

For example, regarding A-WUSs #1 to #4, CDM may be used between A-WUS #1 and A-WUS #2 and between A-WUS #3 and the A-WUS #4. Then, TDM may be used between A-WUS #1 (and A-WUS #2) and A-WUS #3 (and A-WUS #4).

As described above, in the present embodiment, user terminal 20 that is the Rel.16-UE includes reception section 102 that receives the A-WUS (a second wake-up signal) which is multiplexed onto the L-WUS (a first wake-up signal) using a prescribed multiplexing scheme and is transmitted, and control section 103 that detects an identifier associated with the A-WUS and controls the reception of the PO (the paging signal) associated with the detected identifier. The L-WUS and the A-WUS are multiplexed using a prescribed multiplexing scheme, and thus the WUS that possibly ensures the backward compatibility is configured. For example, the L-WUS and the A-WUS are multiplexed, and thus user terminal 20 that is the legacy-UE can detect the L-WUS and user terminal 20 that is the Rel. 16-UE can detect the A-WUS.

Furthermore, the L-WUS and the A-WUS are multiplexed, and thus user terminal 20 that is the Rel.16-UE can perform channel estimation using the L-WUS. Then, because user terminal 20 that is the Rel. 16-UE can detect the A-WUS using a result of the estimation, the precision with which the A-WUS is detected can be improved.

It is noted that, as described above, because the A-WUS is configured for every UE group, in a case where the number of UE groups increases, there is a likelihood that the number of sequences which is used for the A-WUS will increase. In a case where the number of sequences that are used for the A-WUS increases, in user terminal 20 that is the Rel.16-UE, there is a likelihood that a load relating to the detection processing for determining the UE group associated with the received A-WUS will increase, and/or that the probability of the failure in the detection will increase. For example, in a case where the detection of the A-WUS fails, there is a likelihood that the detection of a wrong UE group, that is, erroneous detection (false alarm) will occur.

Accordingly, in the following, a load relating to the detection processing of the A-WUS that is configured for every UE group, and/or a method of reducing the probability of the failure in the detection will be described.

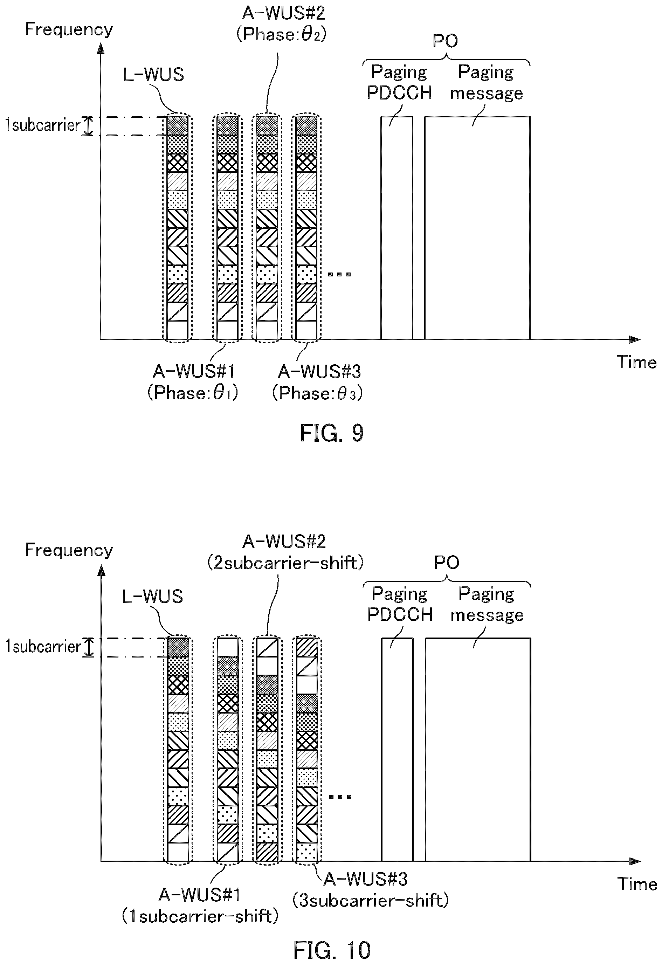

FIG 9 is a diagram illustrating a fourth example of the WUS according to the present embodiment.

The horizontal axis in FIG 9 represents time and the vertical axis represents a frequency. In FIG 9, the L-WUS, the A-WUS that is configured at a later timing than the L-WUS, and the PO that is configured at a later timing than the A-WUS are illustrated. It is noted that the L-WUS and the A-WUS are associated with the PO.

Then, in the L-WUS and the A-WUS, one rectangle that results from partitioning in the frequency direction, for example, indicates one Resource Element (RE). A width in the frequency direction, of one RE is equivalent to one subcarrier, and a width in the time direction is equivalent to one symbol. In FIG 9, each of the L-WUS and the A-WUS, for example, has widths in the frequency direction, of 12 subcarriers. It is noted that the number of subcarriers of the WUS is not limited to 12 and may be equal to or smaller than 11 or may be equal to or greater than 13.

In FIG 9, a display aspect of each RE that is included in the L-WUS and the A-WUS represents an example of an element in a sequence that is used for the WUS. For example, the same display aspect represents that the element in the sequence that is used for the WUS is the same. The same sequence is used for the L-WUS and the A-WUS that are illustrated in FIG 9.

Then, the UE group that is associated with each of A-WUSs #1 to #3 is identified with the UE group ID. In FIG 9, the UE group ID is indicated by a phase difference between the L-WUS and the A-WUS.

For example, A-WUS #1 in FIG 9 has a phase difference of θ1 with respect to the L-WUS, A-WUS #2 has a phase difference of θ2 with respect to the L-WUS, and A-WUS #3 has a phase difference of θ3 with respect to the L-WUS. θ1, θ2, and θ3 are different from each other.

The Rel.16-UE receives the L-WUS and performs the channel estimation using the L-WUS. Based on a result of the channel estimation, the Rel.16-UE estimates a phase difference between the A-WUS and the L-WUS. Then, in a case where the estimated phase difference is a phase difference that corresponds to the UE group ID of the UE group to which the Rel.16-UE belongs, the Rel.16-UE determines that the received A-WUS is associated with the UE group to which the Rel.16-UE belongs. In a case where the received A-WUS is associated with the UE group to which the Rel.16-UE belongs, the Rel.16-UE performs monitoring of the PO that follows the A-WUS.

By using the result of the channel estimation, which is obtained by the estimation that uses the L-WUS, the Rel.16-UE, for example, can suppress an influence of a phase change due to a channel change and can improve the precision of the estimation of the phase difference between the A-WUS and the L-WUS. Furthermore, because the same sequence is used between the L-WUS and the A-WUS, the detection processing can be simplified. For this reason, simple detection processing of the A-WUS can be performed robustly.

It is noted that, with computation processing that is based on comparison between the L-WUS and the A-WUS, the Rel.16-UE may perform the estimation of the phase difference. For example, the Rel.16-UE may compute a cross-correlation between the L-WUS and the A-WUS and may use a result of the calculation for the estimation of the phase difference. By using the result of the computation of the cross-correlation for the estimation of the phase difference, an influence of fading that occurs when receiving the L-WUS and the A-WUS can be suppressed and an improvement in detection performance of the WUS can be accomplished. It is noted that an example of the computation processing which is based on the comparison between the L-WUS and the A-WUS is described above as computation of the cross-correlation, but the present disclosure is not limited to this.

It is noted that the detection processing of the A-WUS in the Rel.16-UE is not limited to the example described above. In the detection processing of the A-WUS, the Rel. 16-LTE may not use the result of the channel estimation that uses the L-WUS and may not perform the comparison between the A-WUS and the L-WUS.

FIG 10 is a diagram illustrating a fifth example of the WUS according to the present embodiment.

The horizontal axis in FIG 10 represents time and the vertical axis represents a frequency. In FIG 10, the L-WUS, the A-WUS that is configured at a later timing than the L-WUS, and the PO that is configured at a later timing than the A-WUS are illustrated. It is noted that the L-WUS and the A-WUS are associated with the PO.

Then, in the L-WUS and the A-WUS, one rectangle that results from partitioning in the frequency direction, for example, indicates one RE in the same manner as in FIG 9.

In FIG 10, a display aspect of each RE that is included in the L-WUS and the A-WUS represents an example of an element in a sequence that is used for the WUS. For example, the same display aspect represents that the element in the sequence that is used for the WUS is the same. The same sequence is used for the L-WUS and the A-WUS that are illustrated in FIG 10.

Then, the UE group that is associated with each of A-WUSs #1 to #3 is identified with the UE group ID. In FIG 10, the UE group ID is indicated by an amount of shift in the frequency direction (an amount of shift in a subcarrier) between the L-WUS and the A-WUS.

For example, A-WUS #1 in FIG 10 is the WUS that results from shifting the L-WUS by one subcarrier. A-WUS #2 is the WUS that results from shifting the L-WUS by two subcarriers. A-WUS #3 is the WUS that results from shifting the L-WUS by three subcarriers. It is noted that, in FIG 10, the example in which the shifting occurs by one subcarrier at a time is illustrated, but that the amount of the shift may correspond to two or more subcarriers.

The Rel.16-UE receives the L-WUS and performs the channel estimation using the L-WUS. Based on the result of the channel estimation, the Rel.16-UE estimates the amount of the shift in the subcarrier between the L-WUS and the A-WUS. In a case where the estimated amount of shift is a amount of shift that corresponds to the UE group ID of the UE group to which the Rel.16-UE belongs, the Rel.16-UE determines that the received A-WUS is associated with the UE group to which the Rel.16-UE belongs. In a case where the received A-WUS is associated with the UE group to which the Rel.16-UE belongs, the Rel.16-UE performs the monitoring of the PO that follows the A-WUS.

Using the result of the channel estimation, which is obtained by the estimation that uses the L-WUS, the Rel. 16-LTE can estimate the amount of the shift in the subcarrier between the A-WUS and the L-WUS. Because of this, simple detection processing of the A-WUS can be performed robustly.

It is noted that the detection processing of the A-WUS in the Rel.16-UE is not limited to the example described above. In the detection processing of the A-WUS, the Rel. 16-LTE may not use the result of the channel estimation that uses the L-WUS.

It is noted that, the example in which the UE group ID is indicated by the phase difference between the L-WUS and the A-WUS and the example in which the UE group ID is indicated by the amount of the shift in the frequency direction (the amount of the shift in the subcarrier) between the L-WUS and the A-WUS are described above, but that the present disclosure is not limited to this. For example, the UE group ID may be indicated by a combination of the phase difference between the L-WUS and the A-WUS and the amount of shift in the frequency direction between the L-WUS and the A-WUS.

It is noted that, in a case where the UE group ID is indicated by the combination of the phase difference and the amount of shift, the Rel. 16-LTE may estimate the UE group ID associated with the A-WUS by combining the detection processing operations described above.

Furthermore, in FIGS. 9 and 10, the example in which the A-WUS has the same size (the same number of REs) as the L-WUS is illustrated, but the A-WUS may have a different size (a different number of REs) than the L-WUS. For example, the A-WUS may have a smaller size than the L-WUS (a smaller number of the REs than the L-WUS). In this case, the A-WUS may use a partial sequence that results from deleting one or several elements from the sequence that is used for the L-WUS.

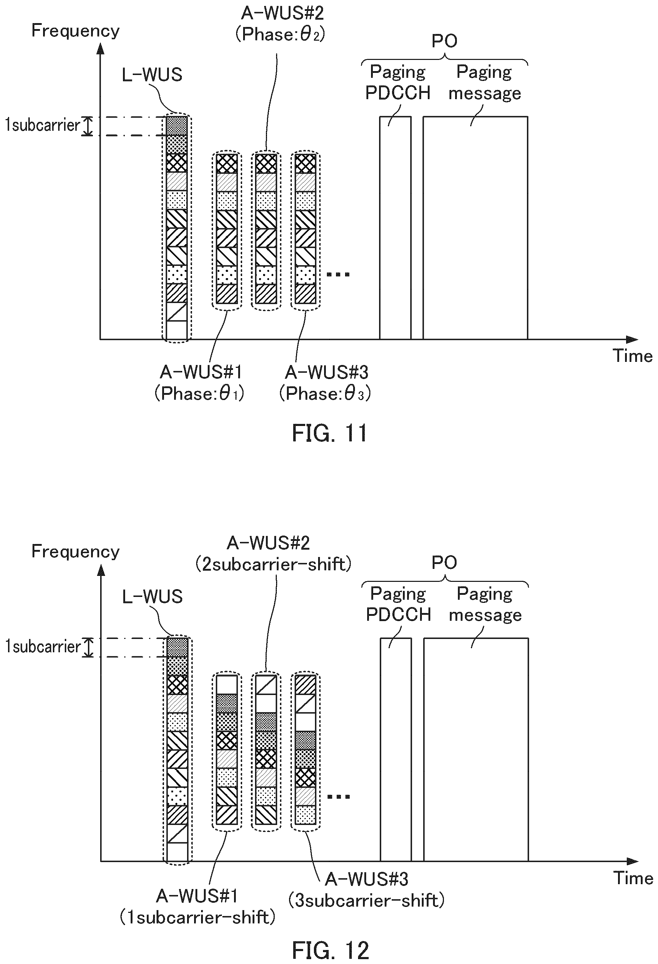

FIG 11 is a diagram illustrating a sixth example of the WUS according to the present embodiment.

A-WUSs #1 to #3 in FIG 11 result from deleting four REs, two on the low frequency side and two on the high frequency side, from A-WUSs #1 to #3 in FIG 9, respectively.

As illustrated in FIG. 11, in a case where the REs are deleted, the A-WUS also uses one or several portions of the L-WUS sequence in the same manner as in FIG 9. Because of this, simple detection processing of the A-WUS can be performed robustly. Furthermore, by deleting the REs that are used for the A-WUS, a quantity of resources can be detected and simple detection of the A-WUS can be performed.

FIG 12 is a diagram illustrating a seventh example of the WUS according to the present embodiment.

A-WUSs #1 to #3 in FIG 12 result from deleting four REs, two on the low frequency side and two on the high frequency side, from A-WUSs #1 to #3 in FIG 10, respectively.

As illustrated in FIG 12, in the case where the REs are deleted, the A-WUS also uses one or several portions of the L-WUS sequence in the same manner as in FIG 10. Because of this, the amount of the shift in the subcarrier between the L-WUS and the A-WUS can be estimated by computing the cross-correlation between the L-WUS and the A-WUS. For this reason, simple detection processing of the A-WUS can be performed robustly. Furthermore, by deleting the REs that are used for the A-WUS, a quantity of resources can be detected and simple detection of the A-WUS can be performed.

It is noted that, in FIGS. 11 and 12, the example in which the number of the REs that are deleted on the low frequency side is the same as that which is deleted on the high frequency side is illustrated, but the different numbers of the REs may be deleted on the low frequency side and on the high frequency side, respectively. Alternatively, the RE may be deleted on one of the low frequency side and the high frequency side.

Furthermore, in FIGS. 11 and 12, the example in which the numbers of REs that are deleted in A-WUSs #1 to #3 are the same is illustrated, but the present disclosure is not limited to this. For example, the number of the REs that are deleted may be changed for every A-WUS. The changing of the number of the REs that are deleted for every A-WUS is equivalent to the changing of the number of the REs that are used for every A-WUS. For example, the UE group ID and the number of the REs that are deleted or the number of the REs that are used may be associated with each other. In this case, the UE group ID may be indicated by the number of the REs that are deleted and the number of the REs that are used.

Furthermore, in FIGS. 11 and 12, the example in which positions of REs that are deleted in A-WUSs #1 to #3 are the same is illustrated, but the present disclosure is not limited to this. For example, the positions of the REs that are deleted may be changed for every A-WUS. The changing of the positions of the REs that are deleted for every A-WUS is equivalent to the changing of the positions of the REs that are used for every A-WUS. For example, the UE group ID and the positions of the REs that are deleted or the positions of the REs that are used may be associated with each other. In this case, the UE group ID may be indicated by the positions of the REs that are deleted and the positions of the REs that are used.

Alternatively, by changing at least one of the positions and the number of the REs that are deleted for every A-WUS, the UE group ID may be indicated by a combination of the positions and the number of the deleted REs. Alternatively, by changing at least one of the positions and the number of the REs that are used for every A-WUS, the UE group ID may be indicated by a combination of the positions and the number of the REs that are used.

Furthermore, in FIGS. 11 and 12, an example in which A-WUSs #1 to #3 are configured with contiguous REs in the frequency direction are illustrated, but the present disclosure is not limited to this. The A-WUS may be configured with REs that are positioned discretely. For example, the position of the RE may be changed for every A-WUS. For example, by associating the UE group ID and a pattern of the positions of discrete REs with each other, the UE group ID may be indicated by a difference in the pattern.

It is noted that the example in which the A-WUS has the same size (the same number of the REs) as the L-WUS is illustrated in FIGS. 9 and 10 and that the example in which the A-WUS has a smaller size (a smaller number of the REs) than the L-WUS is illustrated in FIGS. 11 and 12. However, it is noted that the present disclosure is not limited to this. The number of the REs that are used for the A-WUS may be greater than the number of the REs that are used for the L-WUS. In this case, the sequence that is used for the A-WUS may be a sequence that results from expanding the sequence that is used for the L-WUS. A sequence expansion method is not limited, but, for example, the sequence that is used for the L-WUS may be expanded by cyclically shifting one or several portions of the sequence that is used for the L-WUS.

It is noted that in FIGS. 9 and 12, the example in which A-WUSs #1 to #3 are multiplexed using TDM, but the present disclosure is not limited to this. In the following, an example in which A-WUSs #1 to #3 are multiplexed using FDM is described.

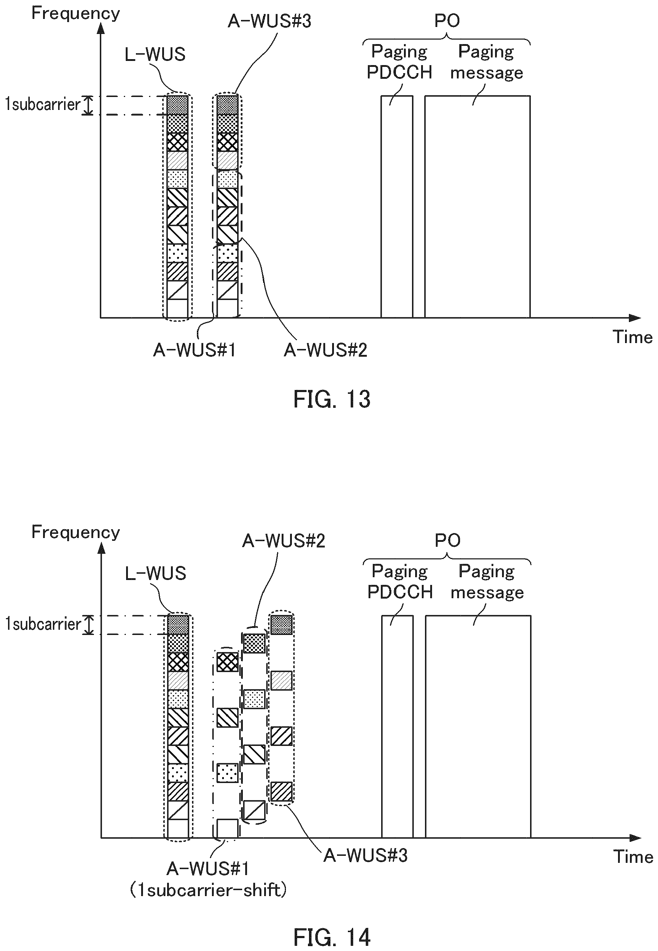

FIG. 13 is a diagram illustrating an eighth example of the WUS according to the present embodiment. FIG 14 is a diagram illustrating a ninth example of the WUS according to the present embodiment.

The horizontal axis in FIGS. 13 and 14 represents time and the vertical axis represents a frequency. In FIGS. 13 and 14, the L-WUS, the A-WUS that is configured at a later timing than the L-WUS, and the PO that is configured at a later timing than the A-WUS are illustrated. It is noted that the L-WUS and the A-WUS are associated with the PO.

Furthermore, A-WUSs #1 to #3 are multiplexed at the same time (for example, in the same symbol) using FDM. It is noted that, in FIG 14, for convenience in illustration, it is illustrated that the REs which are included in the same time (for example, in the same symbol) are shifted in the time direction.

Then, in the L-WUS and the A-WUS, one rectangle that results from partitioning in the frequency direction, for example, indicates one RE in the same manner as in FIG. 9.

In FIGS. 13 and 14, a display aspect of each RE that is included in the L-WUS and the A-WUS represents an example of an element in the sequence that is used for the WUS. For example, the same display aspect represents that the element in the sequence that is used for the WUS is the same. The same sequence is used for the L-WUS and the A-WUS that are illustrated in FIGS. 13 and 14.

Then, the UE group that is associated with each of A-WUSs #1 to #3 is identified with the UE group ID. In FIGS. 13 and 14, the UE group ID is indicated by positioning of the A-WUS in the frequency direction with respect to the L-WUS.

For example, the A-WUS #1 in FIG 13 is equivalent to four subcarriers on the low frequency side, of the L-WUS. A-WUS #3 is equivalent to four subcarriers on the high frequency side, of the L-WUS. A-WUS #2 is equivalent to four subcarriers at a frequency between A-WUS #1 and A-WUS #2.

For example, A-WUS #1 to A-WUS #3 in FIG 14 include REs of subcarriers that are different from each other. Each of A-WUS #1 to A-WUS #3 in FIG 14 includes REs that line up in the form of a comb in the frequency direction.

The Rel.16-UE receives the L-WUS and performs the channel estimation using the L-WUS. Based on the result of the channel estimation, the Rel.16-UE estimates the positioning of the A-WUS in the frequency direction with respect to the L-WUS. Then, in a case where the estimated phase positioning is positioning that is associated with the UE group ID of the UE group to which the Rel.16-UE belongs, the Rel.16-UE determines that the received A-WUS is associated with the UE group to which the Rel.16-UE belongs.

By using the result of the channel estimation, which is obtained by the estimation that uses the L-WUS, the Rel.16-UE can suppress an influence of the channel change and can improve the precision of the estimation of the positioning of the A-WUS in the frequency direction with respect to the L-WUS. Furthermore, because the same sequence is used between the L-WUS and the A-WUS, the detection processing can be simplified. For this reason, simple detection processing of the A-WUS can be performed robustly.

It is noted that in the detection processing of the A-WUS, the cross-correlation between the L-WUS and the A-WUS may be used.

For example, the Rel.16-UE receives the L-WUS and the A-WUS, computes the cross-correlation between the L-WUS and the A-WUS, and thus estimates the positioning of the A-WUS in the frequency direction with respect to the L-WUS. In a case where the estimated positioning is positioning that corresponds to the UE group ID of the UE group to which the Rel.16-UE belongs, the Rel.16-UE determines that the received A-WUS is associated with the UE group to which the Rel.16-UE belongs.

Because the Rel. 16-UE can estimate the positioning of the A-WUS with respect to the L-WUS using the cross-correlation between the L-WUS and the A-WUS, simple detection processing of the A-WUS can be performed.

It is noted that in the detection processing of the A-WUS, the Rel.16-UE may perform the detection of the A-WUS using both of the result of the channel estimation, which is obtained by the estimation that uses the L-WUS, and the cross-correlation between the L-WUS and the A-WUS.

As described above, based on the L-WUS, the A-WUS may change parameters of the A-WUS, such as an amount of shift, an amount of shift in the frequency direction, a size (the number of REs), and a position in the frequency direction. Then, the UE group ID that is associated with each A-WUS may be indicated by at least one of the parameters of the A-WUS, which are changed based on the L-WUS.

It is noted that in the example described above, based on the result of the detection of the A-WUS, the Rel. 16-LTE determines whether or not the monitoring processing of the PO is performed, but that the present disclosure is not limited to this. For example, based on the result of the detection of the L-WUS and the A-WUS, the Rel. 16-LTE may determine whether or not the monitoring processing of the PO is performed.

For example, regardless of the UE group ID that is associated with the A-WUS, operation of the Rel.16-UE may be determined depending on the occurrence or non-occurrence of the detection of the L-WUS. Furthermore, for example, the operation of the Rel.16-UE may be determined by a combination of the occurrence or non-occurrence of the detection of the L-WUS and the UE group ID that is associated with the A-WUS. For example, in a case where the received A-WUS is associated with the UE group to which the Rel.16-UE belongs, the Rel.16-UE may also change the operation depending on the occurrence of non-occurrence of the detection of the L-WUS.

It is noted that, in a case where the Rel.16-UE detects the L-WUS and the A-WUS, for example, the L-WUS and the A-WUS may be referred to as a first WUS and a second WUS, respectively.

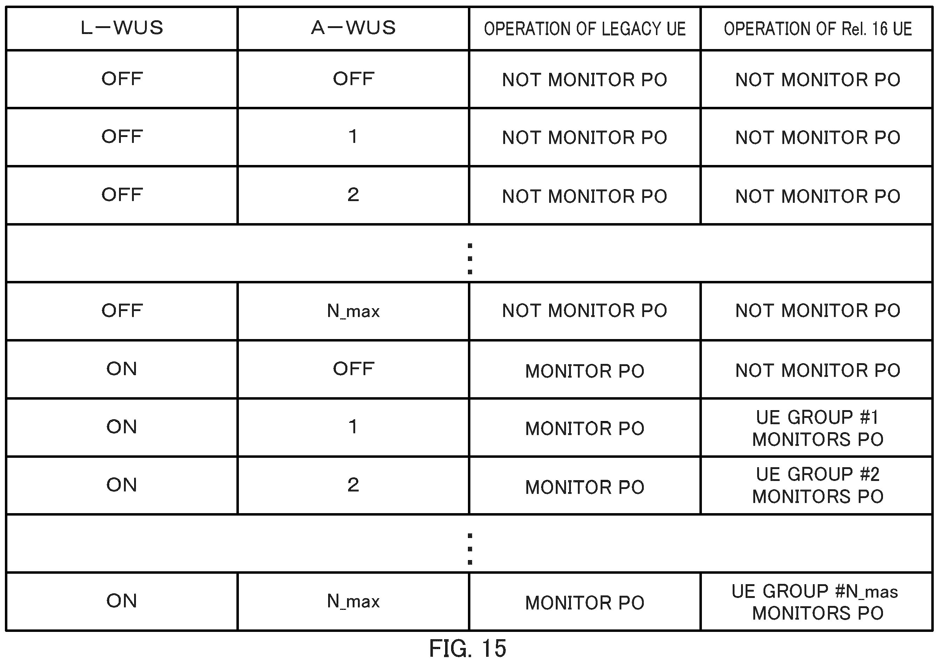

FIG 15 is a diagram illustrating a first example of an operational relationship between the L-WUS, the A-WUS, and the UE.

In FIG 15, an operational correspondence relationship among the occurrence or non-occurrence of the detection of the L-WUS, the UE group ID that is associated with the A-WUS, operation of the legacy-UE, and the operation of the Rel. 16-UE is illustrated in a table form.

In a "L-WUS" column (field) in FIG 15, "ON" indicates a case where L-WUS is detected, and "OFF" indicates a case where L-WUS is not detected. It is noted that cases where L-WUS is not detected include a case where L-WUS is not transmitted and a case where the detection of transmitted L-WUS fails. It is noted that "ON" and "OFF" in the L-WUS may be understood as an ID that is associated with the L-WUS.

In a "A-WUS" column in FIG 15, "OFF" indicates a case where A-WUS is not detected. It is noted that, in cases where A-WUS is not detected include a case where A-WUS is not transmitted and a case where the detection of the transmitted A-WUS fails.

In "A-WUS" column in FIG 15, "1" to "N_max" correspond to UE group IDs that are associated with the A-WUSs. In FIG 15, the number of UE groups is N_max. In FIG 15, UE group IDs, " 1" to "N_max", are assigned to N_max UE groups, respectively.

The operation of the legacy-UE that is illustrated in FIG 15 is described. In a case where the L-WUS is not detected, the legacy-UE does not monitor the PO. Then, in a case where the L-WUS is detected, the legacy-UE monitors the PO.

The operation of the Rel.16-UE that is illustrated in FIG 15 is described. It is noted that, as an example, an example in which the Rel.16-UE belongs to UE group #1 is described.

In a case where the L-WUS is not detected, the Rel.16-UE that belongs to UE group #1 does not monitor the PO regardless of whether or not the A-WUS associated with UE group ID #1 is detected. Furthermore, in a case where the L-WUS is detected and where the A-WUS associated with UE group ID #1 is detected, the Rel.16-UE that belongs to the UE group #1 monitors the PO. Furthermore, in a case where the L-WUS is detected and where the A-WUS associated with UE group ID #1 is not detected, the Rel.16-UE that belongs to UE group #1 does not monitor the PO.

It is noted that cases where the Rel.16-UE does not detect the A-WUS associated with UE group ID#1 may include a case where the Rel.16-UE detects the A-WUS associated with the UE group ID that is different from UE group ID#1.

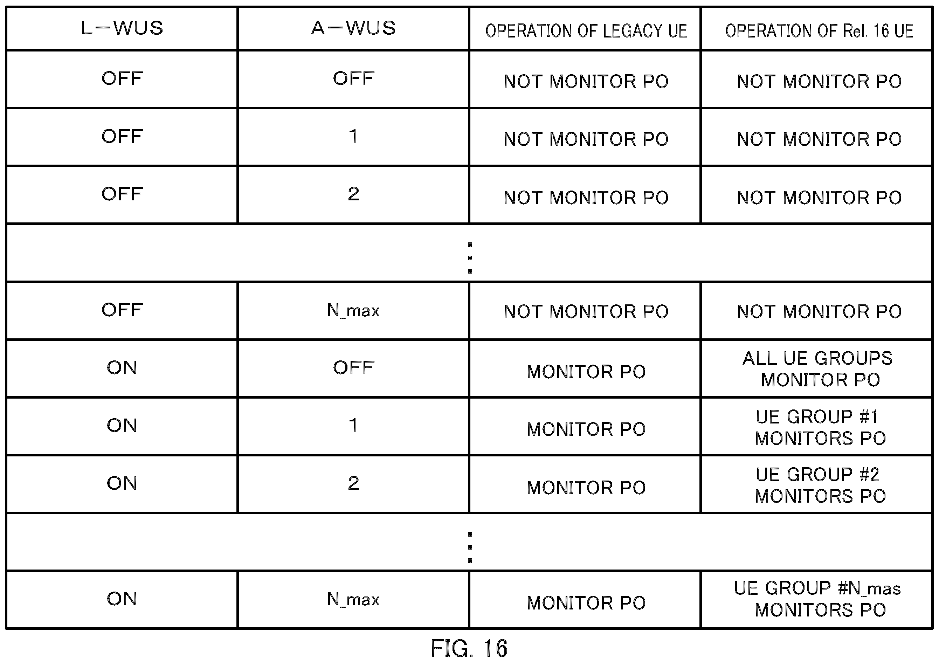

FIG 16 is a diagram illustrating a second example of the operational relationship between the L-WUS, the A-WUS, and the UE.

FIG 16 is different from FIG 15 in terms of the operation of the Rel.16-UE that is associated with "ON" in the L-WUS and "OFF" in the A-WUS. The difference in the operation will be described below.

In a case where the L-WUS is detected and where the A-WUS is not detected, the Rel.16-UE monitors the PO regardless of the UE group to which the Rel.16-UE belongs. In other words, regarding the Rel.16-UE that is associated with "ON" in the L-WUS and "OFF" in the A-WUS, pieces of UE in all UE groups monitor the PO.

As described above, the operation of the Rel.16-UE may be determined by a combination of the occurrence or non-occurrence of the detection of the L-WUS and the UE group ID that is associated with the A-WUS.

It is noted that, in the example described above, the UE group ID and the WUS ID are associated with each other on a one-to-one basis, but that the present disclosure is not limited to this. For example, the WUS ID may be associated with multiple UE group IDs.

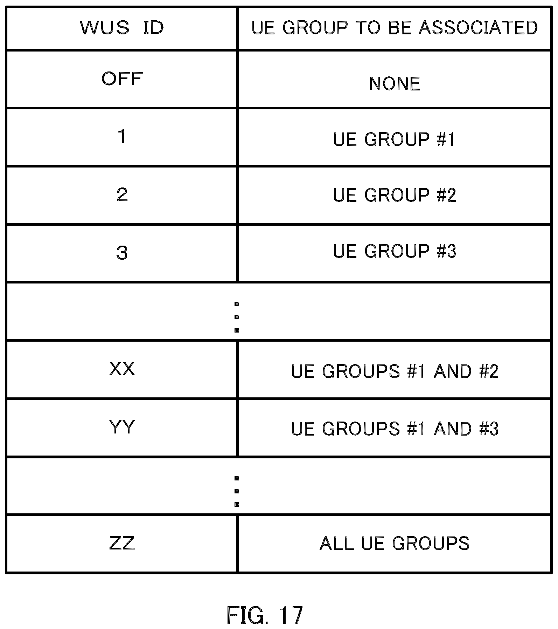

FIG 17 is a diagram illustrating a first example of the association between the UE group and the WUS ID according to the present embodiment.

In FIG 17, for example, WUS IDs that are associated with UE groups #1 to #3 are "1" to "3", respectively. Furthermore, the WUS ID that is associated with a combination of UE group #1 and UE group #2 is "XX". Furthermore, the WUS ID that is associated with a combination of UE group #1 and UE group #3 is "YY". Furthermore, the WUS ID that is associated with all UE groups is "ZZ".

For example, in a case where an example that is illustrated in FIG 17 is applied to the association between the UE group ID and the WUS ID and where radio base station 10 provides the "wake-up" instruction to the UE in UE group #1, the A-WUS with which WUS ID #1 is associated may be transmitted. Furthermore, for example, in a case where the "wake-up" instruction is provided to the pieces of UE in UE group #1 and UE group #2, radio base station 10 may transmit the A-WUS with which WUS ID#XX is associated.

It is noted that in a case where the example in FIG 17 is applied, if the WUS ID that is associated with the A-WUS is "1", "XX", "YY", or "ZZ", the UE in UE group #1 monitors the PO.

As described above, in a case where the "wake-up" instruction is provided to pieces of UE in multiple UE groups, radio base station 10 may not transmit multiple A-WUSs by associating one WUS ID with multiple UE group IDs. For this reason, a reduction in a transmit power of each A-WUS in a case where multiple A-WUSs are multiplexed using CDM can be suppressed. Furthermore, an increase in time overhead in the case where multiple A-WUSs are multiplexed using TDM can be suppressed.

It is noted that the example in FIG 17 is an example in which it is illustrated that one WUS ID is associated with one or more UE groups IDs. Next, an example in which a combination of WUS IDs that are associated with two A-WUSs, respectively, is associated with one or more UE groups will be described.

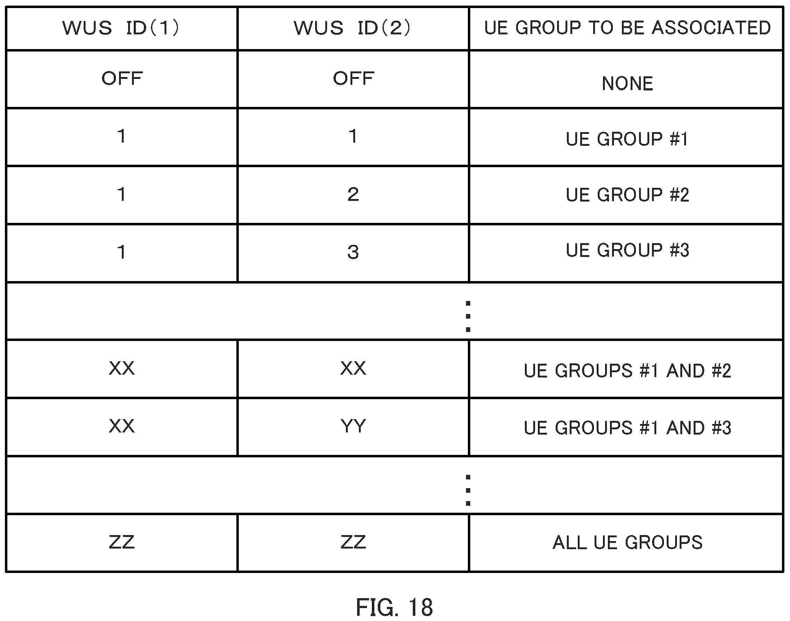

FIG 18 is a diagram illustrating a second example of the association between the UE group and the WUS ID according to the present embodiment.

In FIG 18, an example of association between two WUS IDs (WUS ID(1) and WUS ID(2)) and a combination of UE group IDs is illustrated. It is noted that the A-WUS associated with WUS ID(1) and the A-WUS associated with WUS ID(2) are multiplexed using any one of TDM, FDM, and CDM.

It is noted that for example, the A-WUS associated with WUS ID (1) may be referred to as a first A-WUS. Furthermore, the A-WIS associated with WUS ID(2) may be referred to as a second A-WUS.

In FIG 18, for example, WUS ID(1) and WUS ID(2) that are associated with UE group #1 are "1" and "1", respectively. Furthermore, for example, WUS ID(1) and WUS ID(2) that are associated with a combination of UE group #1 and UE group #2 are "XX" and "XX", respectively. It is noted that in the following description, for example, WUS ID(1) #i (i is an integer that is equal to or greater than 1) indicates that WUS ID(1) is "i" and WUS ID(2) #i indicates that WUS ID(2) is "i".

For example, in a case where an example that is illustrated in FIG. 18 is applied and where radio base station 10 provides the "wake-up" instruction to the UE in UE group #1, the first A-WUS with which WUS ID(1)#1 is associated and the second A-WUS with which WUS ID(2)#1 is associated may be transmitted. Furthermore, for example, in a case where radio base station 10 provides the "wake-up" instruction to the pieces of UE in UE group #1 and UE group #2, the first A-WUS with which WUS ID(1)#XX is associated and the second A-WUS with which WUS ID(2)#XX is associated may be transmitted.

As described above, the combination of the WUS IDs is associated with one or more UE groups, and thus the number of WUS IDs can be reduced. Because of this, a load relating to the detection processing of the A-WUS can be suppressed.

For example, a case where a combination of UE groups that is matched with the WUS ID has 9 patterns is described as an example. In a case where one WUS ID and the combination of UE groups, which has the 9 patterns, are associated with each other, at least 9 WUS IDs are used. On the other hand, combinations of two WUS IDs and the combination of UE groups, which has the 9 patterns, are associated with each other, at least 3 WUS IDs are used. Because of this, the number of WUS IDs can be reduced.

It is noted that in FIG 18, examples of combinations of two WUS IDs are illustrated, but that the present disclosure is not limited to these. For example, combinations of three or more WUS IDs and the combination of UE groups may be associated with each other.

Furthermore, the combinations of WUS IDs, which are described above, may include a combination in the case of "OFF" in the A-WUS, more precisely, a case where the A-WUS is not detected. It is noted that cases where the A-WUS is not detected, include a case where the A-WUS is not transmitted.

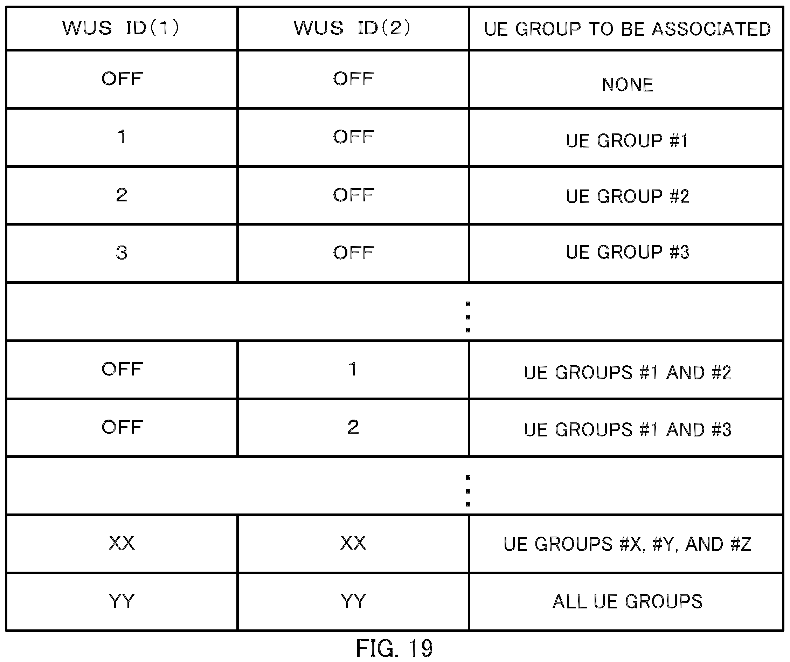

FIG 19 is a diagram illustrating a third example of the association between the UE group and the WUS ID according to the present embodiment.

In FIG 19, an example of association between two WUS IDs (WUS ID(1) and WUS ID(2)) and a combination of UE group IDs is illustrated.

In FIG. 19, for example, WUS ID(1) and WUS ID(2) that are associated with UE group #1 are "1" and "OFF", respectively. At this point, "OFF" in WUS ID(2) may be understood as being equivalent to non-detection of the second A-WUS.

Furthermore, for example, WUS ID(1) and WUS ID(2) that are matched with a combination of UE group #1 and UE group #2 are "OFF" and "1", respectively. At this point, "OFF" in WUS ID(1) may be understood as being equivalent to non-detection of the first A-WUS.

For example, in a case where an example that is illustrated in FIG 19 is applied and where radio base station 10 provides the "wake-up" instruction to the UE in UE group #1, the first A-WUS with which WUS ID(1)#1 is associated may be transmitted without the second A-WUS being transmitted. Furthermore, for example, in the case where the "wake-up" instruction is provided to the pieces of UE in UE group #1 and UE group #2, radio base station 10 may transmit the second A-WUS associated with WUS ID(2)#1 without transmitting the first A-WUS.

Furthermore, the combinations of WUS IDs, which are described above, include a combination in the case of "OFF" in the A-WUS", and thus the number of WUS IDs can be reduced. Because of this, the load relating to the detection processing of the A-WUS can be suppressed.

The embodiment in the present disclosure is described above.

### <Hardware Configuration>

It is noted that the block diagram that is referred to for the description of the embodiment illustrates blocks on a per-function basis. These functional blocks (constituent sections) are realized by an arbitrary combination of at least pieces of hardware or pieces of software. Furthermore, a method of realizing each functional block is not particularly limited. That is, each functional block may be realized using one apparatus that results from physical or logical coupling, and may be realized by making a connection to two or more apparatuses that are separated physically or logically, in a direct or indirect manner (for example, such as in a wired or wireless manner) and using these multiple apparatuses. The functional block may be realized by combining the one or more apparatuses, which are described above, and a piece of software.

The functions include determining, deciding, judging, calculating, computing, processing, deriving, investigating, looking-up, ascertaining, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like, and are not limited to these. For example, a functional block (a constituent section) that causes a transmission function to be performed is referred to a transmission section (a transmitting unit) or a transmitter. Any one of the functional blocks is as described above, and a method of realizing a function block is not particularly limited.

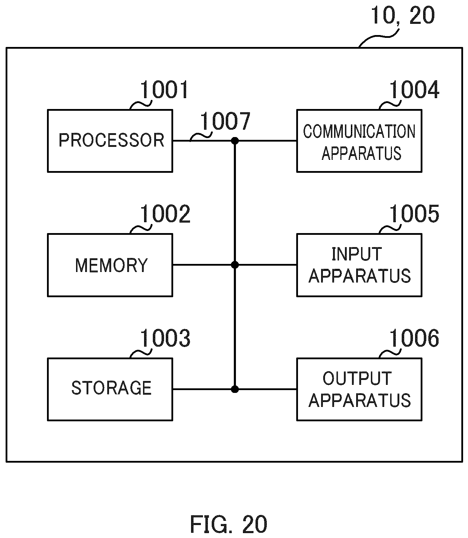

For example, a base station, a user terminal, and the like according to an embodiment in the present disclosure may function as a computer that performs processing for a radio communication method in the present disclosure. FIG 20 is a diagram illustrating an example of a hardware configuration of a base station and a user terminal according to an embodiment in the present disclosure. Radio base station 10 and user terminal 20, which are described above, may be physically configured as a computer apparatus that includes processor 1001, memory 1002, storage 1003, communication apparatus 1004, input apparatus 1005, output apparatus 1006, bus 1007, and the like.

It is noted that, in the following description, the term apparatus can be replaced with a circuit, a device, a unit, or the like. Hardware configurations of radio base station 10 and user terminal 20 may be employed in such a manner that one or more apparatuses that are illustrated are included, and may be configured without including one or several of the apparatuses.

A prescribed piece of software (a program) is read to be loaded onto a piece of hardware such as processor 1001, memory 1002, or the like, and thus processor 1001 performs an arithmetic operation, thereby controlling communication by communication apparatus 1004 or controlling at least one of reading and writing of data from and to memory 1002 and storage 1003. When this is done, a function of each of radio base station 10 and user terminal 20 is realized.

Processor 1001, for example, causes an operating system to operate and thus controls an entire computer. Processor 1001 may be configured with a central processing apparatus (a central processing unit (CPU)) that includes an interface with a peripheral apparatus, a control apparatus, an arithmetic operation apparatus, a register, and the like. For example, control section 103 and control section 203, which are described above, and the like may be realized by processor 1001.

Furthermore, processor 1001 reads a program (a program code), a software module, data, and the like from at least one of storage 1003 and communication apparatus 1004 into memory 1002, and performs various processing operations according to these. As the program, a program is used that causes the computer to perform at least one or several of the operations in the embodiment described above. For example, control section 103 of radio base station 10 and/or control section 203 of user terminal 20 may be realized by a control program that is stored in memory 1002 and operates in processor 1001, and may also be realized in the same manner for any other functional block. The various processing operations described above are described as being performed by one processor 1001, but may be performed by two or more processors 1001 at the same time or sequentially. Processor 1001 may be integrated into one or more chips. It is noted that the program may be transmitted from a network over an electric telecommunication line.

Memory 1002 is a computer-readable recording medium, and, for example, may be configured with at least one of a Read Only Memory (ROM), an Erasable Programmable ROM (EPROM), an Electrically Erasable Programmable ROM (EEPROM), a Random Access Memory (RAM), and the like. Memory 1002 may be referred to a register, a cache, a main memory (a main storage apparatus), or the like. A program (a program code), a software module, or the like that is executable in order to perform the radio communication method according to the embodiment in the present disclosure can be retained in memory 1002.

Storage 1003 is a computer-readable recording medium, and, for example, may be configured with at least one of an optical disk such as a Compact Disc ROM (CD-ROM), a hard disk drive, a flexible disk, a magneto-optical disk (for example, a compact disk, a digital versatile disk, a Blu-ray (a registered trademark) disk), a smart card, a flash memory (for example, a card, a stick, or a key drive), a floppy (a registered trademark) disk, a magnetic strip, and the like. Storage 1003 may be referred to as an auxiliary storage apparatus. The storage medium described above, for example, may be a database or a server that includes at least one of memory 1002 and storage 1003, or any other suitable medium.

Communication apparatus 1004 is hardware (a transmission and reception device) for performing communication between radio base station or user terminal, and a computer through at least one of a wired network and a radio network, and, for example, is also referred to as a network device, a network controller, a network card, a communication module, or the like. Communication apparatus 1004, for example, may be configured to include a high frequency switch, a duplexer, a filter, a frequency synthesizer, and the like in order to realize at least one of Frequency Division Duplex (FDD) and Time Division Duplex (TDD). For example, transmission section 101, reception section 102, transmission section 201, and reception section 202, which are described, and the like may be realized by communication apparatus 1004.

Input apparatus 1005 is an input apparatus (for example, a keyboard, a mouse, a microphone, a switch, a button, a sensor, or the like) that receives input from the outside. Output apparatus 1006 is an output apparatus (for example, a display, a speaker, an LED lamp, or the like) that performs output to the outside. It is noted that input apparatus 1005 and output apparatus 1006 may be configured to be integrated into one piece (for example, a touch panel).

Furthermore, apparatuses, such as processor 1001, memory 1002, are connected to bus 1007 for communicating information. Bus 1007 may be configured using a single bus and may be configured using a bus that differs from one apparatus to another.

Furthermore, each of radio base station 10 and user terminal 20 may be configured to include pieces of hardware, such as a microprocessor, a Digital Signal Processor (DSP), an Application Specific Integrated Circuit (ASIC), a Programmable Logic Device (PLD), and a Field Programmable Gate Array (FPGA). One or several of, or all of functional blocks of each of radio base station 10 and user terminal 20 may be realized using the hardware. For example, processor 1001 may be integrated into at least one of these pieces of hardware.

### (Information Notification and Signaling)

Information notification is not limited to the aspect and the embodiment, which are described in the present disclosure, and may be performed using any other method. For example, the information notification may be performed with Physical Layer Signaling (for example, Downlink Control Information (DCI), Uplink Control Information (UCI)), Higher Layer Signaling (for example, Radio Resource Control (RRC) Signaling, Medium Access Control (MAC) Signaling, report information (a Master Information Block (MIB)), a System Information Block (SIB)), any other signal, or a combination of these. Furthermore, the RRC signaling may be referred to as an RRC message, and, for example, may be an RRC Connection Setup Message, an RRC Connection Reconfiguration Message, or the like.

### (Application System)

Each of the aspects and embodiments, which are described in the present disclosure, may find application in at least one of Long Term Evolution (LTE), LTE-Advanced (LTE-A), SUPER 3G, IMT-Advanced, a 4th generation mobile communication system (4G), a 5th generation mobile communication system (5G), Future Radio Access (FRA), new Radio (NR), W-CDMA (a registered trademark), GSM (a registered trademark), CDMA 2000, Ultra Mobile Broadband (UMB), IEEE 802.11 (Wi-Fi (a registered trademark)), IEEE 802.16 (WiMAX (a registered trademark)), IEEE 802.20, Ultra-WideBand (UWB), Bluetooth (a registered trademark), any other system that uses a suitable system, and a next-generation system that results from the expansion which is based on these. Furthermore, application in a combination of multiple systems (for example, a combination of at least one of LTE and LTE-A and 5G, or the like) may be possible.

### (Processing Procedure and Others)

In a processing procedure, a sequence, a flowchart, and the like according to each of the aspects and the embodiment, which are described in the present disclosure, the order may be changed as long as there is no conflict. For example, various step elements of the method that is described in the present disclosure are presented in the exemplary order and is not limited to the presented specific order.

### (Operation by the Base Station)

In some cases, a specific operation as performed by the base station in the present disclosure is performed by a higher node (an upper node) that is at a higher level than the base station, depending on the situation. It is apparent that, in a network that is made up of one or more network nodes each of which has a base station, various operations that are performed for communication with a terminal can be performed by at least one of the base station and a network node (for example, an MME, an S-GW, or the like is considered, but no limitation to these is imposed) other than the base station. In the above description, the case where one network node other than the base station is provided is given as an example, but a combination of other multiple network nodes (for example, an MME and an S-GW) may be provided.

### (Input And Output Direction)

Information (refer to the subtitle "Information And Signal") or the like can be output from a higher layer (or a lower layer) to the lower layer (or the higher layer). The information or the like may be input and output through multiple network nodes.

### (Handing the Information And the like that Are Input And Output)

The information and the like that are input and output may be retained in a specific place (for example, a memory) and may be managed using a management table. The information and the like that are input and output can be overwritten, updated, or added. The information and the like that are output may be deleted. The information and the like that are input may be transmitted to any other apparatus.

### (Judging Method)

Judging may be performed with a value (0 or 1) that is represented by one bit, may be performed with a boolean value (true or false), and may be performed with comparison of numerical values (for example, comparison with a prescribed value).

### (Software)

Software is referred to as software, firmware, middleware, a microcode, or hardware description language, but, regardless of whether or not any other terms are available, can be broadly interpreted to mean a command, an instruction set, a code, a code segment, a program code, a program, a subprogram, a software module, an application, a software application, a software package, a routine, a subroutine, an object, an executable file, an execution file, a procedure, a function, or the like.

Furthermore, the software, the command, the information, and the like may be transmitted and received through a transfer medium. For example, in a case where the software is transmitted from a website, a server, or any other remote source using at least one of a cable technology (a coaxial cable, optical fiber, a twisted pair, a Digital Subscriber Line (DSL), or the like) and a radio technology, at least one of the cable technology and the radio technology (an infrared ray, a microwave, or the like) falls with the definition of the transfer medium.

### (Information and Signal)

The information and the signal, which are described in the present disclosure, and the like may be represented using any one of various different technologies. For example, data that can be referred to throughout the above description, an instruction, a command, information, a signal, a bit, a symbol, a chip, and the like may be represented by voltage, current, an electromagnetic wave, a magnetic field or a magnetic particle, a photo field or a photo, or an arbitrary combination of these.

It is noted that the terms which are described in the present disclosure and the terms which are necessary for an understanding of the present disclosure may be replaced with the terms that have the same or similar meaning. For example, at least one of a channel and a symbol may be a signal (signaling). Furthermore, the signal may be a message. Furthermore, a Component Carrier (CC) may be referred to as a carrier frequency, a cell, a frequency carrier, or the like.

### ("System" and "Network")

The terms "system" and "network" that are used in the present disclosure are interchangeably used.

### (Names of a Parameter And a Channel)

Furthermore, the information and the parameter, which are described in the present disclosure, and the like may be represented by an absolute value, may be represented using a relative value from a prescribed value, and may be represented using separate corresponding information. For example, a radio resource may be indicated by an index.

A name that is used for the parameter described above is also not a limited name in any respect. Moreover, in some cases, an equation or the like that use these parameters are different from those that are explicitly disclosed in the present disclosure. Various channels (for example, a PUCCH, a PDCCH, and the like) and information elements can be identified with all suitable names. Because of this, various names that are allocated to these various channels and information elements are not limited names in any respect.

### (Base Station (Radio Base Station))

In the present disclosure, the terms "base station (BS)", "radio base station", "fixed station", "NodeB", "eNodeb (eNB)", "gNodeB (gNB)", "access point", "transmission point", "reception point", "transmission/reception point", "cell", "sector", "cell group", "carrier", and "component carrier", and the like can be interchangeably used. In some cases, the terms "macrocell", "small cell", and "femtocell" are used to refer to the base station.

The base station can accommodate one or more (for example, three) cells. In a case where the base station accommodates multiple cells, an entire coverage area that is covered by the base station can be divided into multiple smaller areas. In each of the smaller cells, a communication service can be provided by a base station subsystem (for example, indoors small-sized base station (Remote Radio Head (RRH))). The term "cell" or "sector" refers to one or several portions or all portions of a coverage area that is covered by at least one of a base station and a base station subsystem that perform the communication service in this coverage.

### (Terminal)

In the present disclosure, the terms "mobile station (MS)", "user terminal", "user equipment (UE)", and "terminal", and the like can be interchangeably used.

In some cases, a person of ordinary skill in the art refers to the mobile station as a subscriber station, a mobile unit, a subscriber unit, a radio unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or using several other suitable terms.

### (Base Station And Mobile Station)

At least one of the base station and the mobile station may be referred to as a transmission apparatus, a reception apparatus, a communication apparatus, or the like. It is noted that at least one of the base station and the mobile station may be a device that is mounted into a mobile body or the mobile body itself. The mobile body may be a vehicle (for example, an automobile or an airplane), may be an unmanned mobile body (for example, a drone, an autonomous vehicle, or the like), and may be a robot (a manned-type or unmanned-type robot). It is noted that at least one of the base station and the mobile station also includes an apparatus that does not necessarily move at the time of communication operation. For example, at least one of the base station and the mobile station may be Internet-of-Things (IoT) equipment such as a sensor.

Furthermore, the base station in the present disclosure may be replaced with the user terminal. For example, each of the aspects and the embodiment in the present disclosure may find application in a configuration that results from replaying communication between the base station and the user terminal with communication (which, for example, may be referred to as device-to-device (D2D), vehicle-to-everything (V2X), or the like) between each of the multiple user terminals. In this case, user terminal 20 may be configured to have the function that base station 10 described above has. Furthermore, the terms "uplink" and "downlink" may be replaced with the expression (for example, "side") that corresponds to inter-terminal communication. For example, an uplink channel, a downlink channel, and the like may be replaced with a side channel.

In the same manner, the user terminal in the present disclosure may be replaced with the base station. In this case, base station 10 is configured to have the function that user terminal 20 described above has.

### (Meaning And Interpretation of a Term)

In some cases, the meaning of the terms "determining" and "determining" are broadened to include various operations. Regarding "determining" and "deciding", for example, a thing that is judged, calculated, computed, processed, derived, investigated, looked up (search or inquiry) (for example, as looked up in a table, a database, or a separate data structure), and ascertained can be inclusively considered as a thing that is determined or decided. Furthermore, regarding to "determining" and "deciding", a thing that is received (for example, as information is received), transmitted (for example, as information is transmitted), input, output, or accessed (for example, as data in a memory is accessed) can be inclusively considered as a thing that is determined or "decided". Furthermore, regarding to "determining" and "deciding", a thing that is resolved, selected, chosen, established, compared, or so on can be inclusively considered as a thing that is "determined" or "decided". More precisely, regarding to "determining" and "deciding", a thing on which any operation is performed can be inclusively considered as a thing that is "determined" or "decided". Furthermore, "determining (deciding)" may be replaced with "assuming", "expecting", "considering", or the like.

The expressions "connected" and "coupled" or all variants of the expressions can mean all direct or indirect connection and coupling between two or more elements, and can imply the presence of one or more intermediate elements between two elements that are "connected" or "coupled" to each other. The connection and the coupling between elements may be made physically, may be made logically, or may be made both physically and logically. For example, "connection" may be replaced with "access". In the case of the use in the present disclosure, it is considered that two elements are "connected" or "coupled" to each other using at least one of one or more electric wires, a cable, and a printed electric connection, and an electromagnetic energy or the like that has a wavelength in a radio frequency domain, a microwave region, and a light (both visible light and invisible light) region, as several non-limiting and non-inclusive examples.

A reference signal can also be referred to as a Reference Signal (RS), and, according to standards that are applied, may be referred to a pilot.

Unless otherwise specified, the expression "based on" that is used in the present disclosure does not mean "based only on". In other words, the description "based on" means both "based only on" and based at least on".

Any reference to elements that use the terms "first" and "second" and the like that are used in the present disclosure does not generally limit a quantity of and the order of these elements. The terms can be used, as a method of distinguishing between two or more elements, in the present disclosure. Therefore, reference to first and second elements does not mean that only two elements are employed, or that the first element has to precede the second element in any form.

"Means" in a configuration of each of the apparatuses described above may be replaced with "section", "circuit", "device", or the like.

In the present disclosure, in a case where "include", "including", and variants of these are used, these terms are intended to have a broad meaning in the same manner as the term "comprising". Moreover, the term "or" that is used in the present disclosure is intended not to be exclusive OR.

The radio frame may be configured with one or more frames in a time domain. Each of the one or more frames in the time domain may be referred to as a subframe. The subframe may be configured with one or more slots in the time domain. The subframe may be a fixed time length (for example, 1 ms) that does not depend on numerology.

The numerology may be a communication parameter that is applied to at least one of transmission and reception of a certain signal or channel. The numerology, for example, indicates at least one of Subcarrier Spacing (SCS), a bandwidth, a symbol length, a cyclic prefix length, Transmission Time Interval (TTI), the number of symbols per TTI, a radio frame configuration, specific filtering processing that is performed by a transmission and reception apparatus in a frequency domain, specific windowing processing that is performed by the transmission and reception apparatus in the time domain, and the like.

The slot is configured with one or more symbols (an Orthogonal Frequency Division Multiplexing (OFDM) symbol, a Single Carrier Frequency Division Multiple Access (SC-FDMA) symbol, or the like) in the time domain. The slot may be a time unit that is based on the numerology.

The slot may include multiple mini-slots. Each of the mini-slots may be configured with one or more symbols in the time domain. Furthermore, the mini-slot may be referred to as a subslot. The mini-slot may be configured with a smaller number of symbols than the slot. A PDSCH (or a PUSCH) that is transmitted in the time unit that is greater than the mini-slot may be referred to as a PDSCH (or a PUSCH) mapping type A. The PDSCH (or the PUSCH) that is transmitted using the mini-slot may be referred to as a PDSCH (or a PUSCH) mapping type B.

Any one of the radio frame, the subframe, the slot, the mini-slot, and the symbol represents the time unit when transferring a signal. A separate name that corresponds to each of the radio frame, the subframe, the slot, the mini-slot, and the symbol may be used.

For example, one subframe may be referred to as a Transmission Time Interval (TTI), multiple contiguous subframes may be referred to as a TTI, and one slot or one mini-slot may be referred to as a TTI. More precisely, at least one of the subframe and the TTI may be a subframe (1 ms) in the existing LTE, may be a duration (for example, 1 to 13 symbols) that is shorter 1 ms, and may be a duration that is longer than 1 ms. It is noted that a unit that represents the TTI may be referred to a slot, a mini-slot, or the like instead of a subframe.

At this point, the TTI, for example, refers to a minimum time unit for scheduling in radio communication. For example, in an LTE system, the base station performs scheduling for allocating a radio resource (a frequency bandwidth, a transmit power, or the like that is used in each user terminal) in a TTI unit to each user terminal. It is noted that the definition of the TTI is not limited to this.

The TTI may be a transmission time unit, such as a data packet (a transport block) that is channel-coded, a code block, or a codeword, and may be a processing unit, such as scheduling or a link adaptation. It is noted that, when the TTI is assigned, a time section (for example, the number of symbols) to which the transport block, the code block, the codeword, or the like is actually mapped may be shorter than the TTI.

It is noted that, in a case where one slot or one mini-slot is referred to as the TTI, one or more TTIs (that is, one or more slots, or one or more mini-slots) may be a minimum time unit for the scheduling. Furthermore, the number of slots (the number of mini-slots) that makes up the minimum time unit for the scheduling may be controlled.

A TTI that has a time length of 1 ms may be referred to as a usual TTI (a TTI in LTE Rel.8-12), a normal TTI, a long TTI, a usual subframe, a normal subframe, a long subframe, a slot, or the like. A TTI that is shorter than the usual TTI may be referred to as a shortened TTI, a short TTI, a partial TTI (a fractional TTI), a shortened subframe, a short subframe, a mini-slot, a subslot, a slot, or the like.

It is noted that the long TTI (for example, the usual TTI, the subframe, or the like) may be replaced with the TTI that has a time length which exceeds 1 ms, and the short TTI (for example, the shortened TTI or the like) may be replaced with a TTI that has a TTI length which is less than a TTI length of the long TTI and is equal to or longer than 1 ms.

A resource block (RB) is a resource allocation unit in the time domain and the frequency domain, and may include one or more contiguous subcarriers in the frequency domain. The number of subcarriers that are included in the RB may be the same regardless of the numerology, and, for example, may be 12. The number of subcarriers that are included in the RB may be determined based on the numerology.

Furthermore, the time domain of the RB may include one or more symbols and may have a length of one slot, one mini-slot, one subframe, or one TTI. One TTI, one subframe, and the like each may be configured with one or more resource blocks.

It is noted that one or more RBs may be referred to as a Physical RB (PRB), a Sub-carrier Group (SCG), a Resource Element Group (REG), a PRB pair, an RB pair, or the like.

Furthermore, the resource block may be configured with one or more Resource Elements (REs). For example, one RE may be a radio resource region that is one subcarrier and one symbol.

A bandwidth part (BWP) (which may be referred to as a partial bandwidth or the like) may represent a subset of contiguous common resource blocks (RB) for certain numerology in a certain carrier. At this point, the common RB may be specified with an RB index that uses a common reference point of the carrier as a reference. The PRBs may be defined with a certain BWP and may be numbered within the BWP

A UL BWP and a DL BWP may be included in the BWP. For the UE, one or more BWPs may be configured to be within one carrier.

At least one of the BWPs that are configured may be active, and it may not be assumed that the UE transmits and receives a prescribed signal or channel outside of the BWP that is active. It is noted that, in the present disclosure, "cell", "carrier", and the like may be replaced with "BWP".

Structures of the radio frame, the subframe, the slot, the mini-slot, the symbol, and the like are only described as examples. For example, the number of subframes that are included in the radio frame, the number of slots per subframe or radio frame, the number of mini-slots that are included within the slot, the numbers of symbols and RBs that are included in the slot or the mini-slot, the number of subcarriers that are included in the RB, the number of symbols within the TTI, the symbol length, the Cyclic Prefix (CP) length, and the like can be configured to be variously changed.

The "maximum transmit power" described in the present disclosure may mean a maximum value of the transmit power, may mean the nominal UE maximum transmit power, and may mean the rated UE maximum transmit power.

In the present disclosure, for example, in a case where articles, such as a, an and the in English, are added during translation, a noun that follows these articles may have the same meaning as when used in the plural.

In the present disclosure, the expression "A and B are different" may mean that "A and B are different from each other". It is noted that the expression may mean that "A and B are different from C". The expressions "separated" and "coupled" may also be interpreted in the same manner as the expression "A and B are different".

### (Variation of the Aspect)

The aspects and the embodiments in the present disclosure may be used individually, may be used in combination, and may be used in a switching manner depending on implementation. Furthermore, notification (for example, notification that "X is present") is not limited to being explicitly performed and may be performed implicitly (for example, notification of prescribed information is not performed).

The detailed description is provided above in the present disclosure, and it is apparent that the present disclosure is not limited to the embodiment that is described in the present disclosure. An amendment and an alteration to the present disclosure can be made without departing from the gist and scope of the present disclosure that is defined by claims. Therefore, the description in the present disclosure is for the purpose of providing an exemplary description and does not impose any limitation in meaning to the present disclosure.

### Industrial Applicability

An aspect of the present disclosure is useful for a radio communication system.

### Reference Signs List

10 Radio base station
20 User terminal
101, 201 Transmission section
102, 202 Reception section
103, 203 Control section

## Claims

1. A user terminal, comprising:
a reception section that receives a second wake-up signal which is multiplexed onto a first wake-up signal, using a prescribed multiplexing scheme, and is transmitted; and
a control section that detects an identifier that is associated with the second wake-up signal, and controls reception of a control signal that is associated with the detected identifier.

2. The user terminal according to claim 1, wherein the multiplexing scheme is at least one of time division multiplexing, code division multiplexing, and frequency division multiplexing.

3. The user terminal according to claim 1, wherein a position of the second wake-up signal on at least one of a time axis and a frequency axis is configured using a position of the first wake-up signal as a reference and is notified to the user terminal.

4. The user terminal according to claim 1, wherein
the second wake-up signal is generated using a sequence which is used for the first wake-up signal, and
the control section detects the identifier of the second wake-up signal, using the first wake-up signal that is received in the reception section.

5. The user terminal according to claim 1, wherein the control section controls reception of the control signal based on the identifier and on occurrence or non-occurrence of detection of the first wake-up signal.

6. A radio base station, comprising:
a transmission section that transmits a second wake-up signal that is multiplexed on a first wake-up signal, using a prescribed multiplexing scheme, and a control signal; and
a control section that associates an identifier with the second wake-up signal.

7. A radio communication method, comprising:
receiving a second wake-up signal that is multiplexed on a first wake-up signal, using a prescribed multiplexing scheme, and is transmitted; and
detecting an identifier associated with the second wake-up signal, and controlling reception of a control signal associated with the detected identifier.
